# FASCICULE DE BREVET EUROPEEN

(11) **EP 4 041 993 B1**
(45) Date de publication et mention de la délivrance du brevet: **09.08.2023**
(21) Numéro de dépôt: 20793032.2
(22) Date de dépôt: 01.10.2020
(51) Int. Cl.: F01D 9/04, F01D 5/18, F01D 5/28

(54) **DISTRIBUTEUR DE TURBINE À AUBAGE EN COMPOSITE À MATRICE CÉRAMIQUE TRAVERSÉ PAR UN CIRCUIT DE VENTILATION MÉTALLIQUE**
TURBINENDÜSE, DIE EINE BESCHAUFELUNG AUS EINEM KERAMISCHEN MATRIX-VERBUNDWERKSTOFF AUFWEIST, DURCH DIE EIN METALL-VENTILATIONSKREISLAUF VERLÄUFT
TURBINE NOZZLE HAVING BLADING MADE OF CERAMIC MATRIX COMPOSITE THROUGH WHICH A METAL VENTILATION CIRCUIT PASSES

(30) Priorité: 07.10.2019 FR 1911098
(43) Date de publication de la demande: 17.08.2022
(73) Titulaire: SAFRAN AIRCRAFT ENGINES, 75015 Paris (FR); Safran Ceramics, 33185 Le Haillan (FR)
(72) Inventeur: JARROSSAY, Clément, 77550 MOISSY-CRAMAYEL (FR); CONGRATEL, Sébastien, Serge, Francis, 77550 MOISSY-CRAMAYEL (FR); GAILLARD, Aurélien, 77550 MOISSY-CRAMAYEL (FR); LE CAIR, David, René, Pierre, 77550 MOISSY-CRAMAYEL (FR); GIMAT, Matthieu, Arnaud, 77550 MOISSY-CRAMAYEL (FR)
(74) Mandataire: Brevalex
(86) Numéro de dépôt international: PCT/FR2020/051722
(87) Numéro de publication internationale: WO 2021/069816

(56) Documents cités:
- EP-A1- 1 239 119
- EP-A1- 3 034 802
- US-A1- 2010 068 034

## Description

### Domaine technique

L'invention se rapporte au domaine des turbines pour turbomachine, notamment pour un ensemble propulsif d'aéronef. L'invention concerne plus spécifiquement un distributeur d'une telle turbine, comprenant un aubage en matériau composite à matrice céramique.

### État de la technique antérieure

Un matériau composite à matrice céramique, ci-après désigné par l'expression « matériau CMC » ou « CMC », comprend généralement un renfort fibreux et une matrice céramique, ou partiellement céramique. Un CMC est un composite thermostructural capable de résister à des contraintes thermiques relativement élevées et ayant une masse volumique relativement faible, en particulier inférieure à celle de matériaux métalliques traditionnellement utilisés pour réaliser des composants de turbine de turbomachine.

Dans le domaine aéronautique, il a été proposé de réaliser des aubes de turbine en CMC. Par exemple, le document FR 2 979 662 décrit un distributeur de turbine comprenant des aubes statoriques en CMC. Un tel distributeur permet de réduire la quantité d'air de ventilation utilisée par rapport à un distributeur ayant des aubes métalliques, ce qui permet d'améliorer les performances de la turbomachine. Un autre exemple est divulgué dans le document US2010/068034.

Dans une turbine aéronautique conventionnelle, l'air de ventilation est typiquement prélevé au niveau d'un compresseur de la turbomachine et acheminé au sein de la turbine pour refroidir notamment les aubes statoriques, exposées aux gaz de combustion, ainsi que les disques des roues mobiles de cette turbine. A cet effet, les aubes statoriques comprennent typiquement un canal interne dans lequel est introduit de l'air de ventilation, et une série d'orifices débouchant d'une part dans ce canal interne et d'autre part au niveau du bord d'attaque ou du bord de fuite.

Pour refroidir les disques, une partie de l'air de ventilation est généralement acheminée via le canal interne d'au moins une partie des aubes statoriques de la turbine vers une cavité centrale dans laquelle s'étendent notamment des moyeux des disques du rotor.

Les aubes statoriques en CMC d'un tel distributeur sont généralement reliées à une virole interne métallique de ce distributeur. Or, un matériau CMC a typiquement un coefficient de dilatation thermique environ trois fois inférieur à celui des alliages métalliques utilisés dans une turbine aéronautique conventionnelle. La dilatation thermique différentielle des aubes en CMC et de la virole interne métallique entraîne des jeux entre ces pièces lors du fonctionnement de la turbomachine, et produit ainsi un défaut d'étanchéité. De tels jeux autorisent en effet une fuite d'air de ventilation et une introduction de gaz de combustion au sein de la cavité centrale.

### Exposé de l'invention

L'invention vise à procurer un distributeur pour turbine de turbomachine comprenant des aubes en matériau composite à matrice céramique et permettant de pallier le défaut d'étanchéité d'un distributeur à aubage en CMC conventionnel.

A cet effet, l'invention a pour objet un distributeur pour turbine de turbomachine s'étendant autour d'un axe central longitudinal, ce distributeur comprenant une virole radialement externe en matériau métallique s'étendant autour dudit axe central longitudinal, une virole radialement interne en matériau métallique concentrique à la virole radialement externe, et une pluralité d'aubes en matériau composite à matrice céramique qui se succèdent circonférentiellement autour de l'axe central longitudinal, chaque aube s'étendant radialement entre la virole radialement interne et la virole radialement externe, chaque aube présentant un profil creux formant un logement interne débouchant à une extrémité radialement interne et à une extrémité radialement externe de cette aube.

Selon l'invention, ce distributeur comprend au moins une chemise en matériau métallique formant un canal radial d'acheminement d'air de ventilation traversant le logement interne de l'une respective des aubes, cette chemise comprenant une extrémité radialement externe fixée à la virole radialement externe et une extrémité radialement interne qui coopère avec la virole radialement interne de sorte que le canal radial soit en regard d'une ouverture respective de la virole radialement interne pour acheminer l'air de ventilation à travers cette ouverture, le distributeur comprenant au moins un joint d'étanchéité disposé entre la virole radialement interne et la chemise de manière à assurer l'étanchéité entre le canal radial et ladite ouverture de la virole radialement interne.

Le distributeur de l'invention peut donc comprendre une ou plusieurs chemises et par conséquent un ou plusieurs canaux radiaux formés par ces chemises. Lorsque le distributeur comprend un unique canal radial, celui-ci traverse le logement de l'une des aubes. L'expression « *au moins une chemise* [...] *formant un canal radial* [...] *traversant le logement interne de l'une respective des aubes* » signifie que, lorsque le distributeur comprend plusieurs chemises et donc plusieurs canaux radiaux, chacun de ces canaux radiaux traverse le logement interne d'une aube différente de l'aube dont le logement interne est traversé par un autre canal radial. En outre, cette formulation n'est pas exclusive de modes de réalisation dans lesquels une aube donnée est traversée par plusieurs canaux radiaux, ces derniers appartenant dans ce cas à différents groupes de canaux radiaux, l'expression « *au moins une chemise* [...]*formant un canal radial* » visant au moins un canal radial de l'un de ces groupes.

Le distributeur de l'invention peut en outre comprendre un ou plusieurs joints d'étanchéité. Quel que soit le nombre de chemises, il existe au moins un joint d'étanchéité disposé entre la virole radialement interne et chacune des chemises. Dans les modes de réalisation décrits ci-après, il est considéré que chaque chemise est associée à un unique joint d'étanchéité de sorte que chaque joint d'étanchéité soit disposé entre la virole radialement interne et une chemise respective pour assurer l'étanchéité entre le canal radial formé par cette chemise et l'ouverture correspondante de la virole radialement interne. L'invention englobe aussi des modes de réalisation dans lesquels plusieurs joints d'étanchéité sont interposés entre la virole radialement interne et une chemise donnée, et des modes de réalisation dans lesquels un joint d'étanchéité donné est interposé entre la virole radialement interne et plusieurs chemises.

Il est décrit dans ce qui suit des caractéristiques, fonctions et avantages relatifs à l'au moins une chemise et à l'au moins un joint d'étanchéité en se référant à une unique chemise et à un unique joint d'étanchéité correspondant. Bien entendu, ces caractéristiques, fonctions et avantages s'appliquent à chacune des chemises et chacun des joints d'étanchéité lorsque le distributeur comprend plusieurs chemises et plusieurs joints d'étanchéité.

L'invention permet d'assurer une étanchéité satisfaisante au niveau de la virole radialement interne, cela en dépit de la dilatation thermique différentielle des aubes en CMC et de cette virole radialement interne métallique.

En effet, une telle configuration du distributeur permet de faire circuler l'air de ventilation dans une partie d'un circuit de ventilation qui est structurellement distincte des aubes, cette partie du circuit de ventilation étant en l'occurrence constituée du canal radial et de l'ouverture correspondante de la virole radialement interne. Cela permet notamment d'éviter une dégradation de l'étanchéité lors de la dilatation thermique différentielle des aubes et de la virole radialement interne, laquelle produit des jeux entre ces pièces.

La chemise et la virole radialement interne étant toutes deux métalliques, ces pièces présentent un coefficient de dilatation thermique sensiblement identique, ce qui permet de conserver un jeu de montage sensiblement constant entre ces pièces lors de leur dilatation thermique.

L'étanchéité est en outre significativement améliorée par le joint d'étanchéité disposé entre la chemise et la virole radialement interne.

Par ailleurs, la chemise étant métallique, celle-ci permet aussi de reprendre les efforts mécaniques auquel le distributeur et en particulier les aubes sont soumises et qui tendent à faire basculer le distributeur. Un tel renforcement structural permet de soulager les aubes en CMC dont les contraintes mécaniques admissibles sont inférieures à celles admissibles par des aubes métalliques conventionnelles.

Pour améliorer encore davantage l'étanchéité du distributeur, le joint d'étanchéité peut être disposé entre la virole radialement interne et la chemise de sorte que ce joint d'étanchéité soit comprimé radialement entre la virole radialement interne et la chemise.

Pour ce faire, la chemise peut de préférence comprendre un épaulement formant une surface d'appui radialement en regard d'une surface d'appui correspondante de la virole radialement interne de sorte que le joint d'étanchéité puisse être comprimé radialement entre ces surfaces d'appui.

En effet, d'une part, la chemise s'étend radialement au sein du logement interne d'une aube ce qui lui confère une forme sensiblement longiligne. Il en résulte une dilatation de cette chemise principalement dans une direction radiale. La chemise étant fixée à la virole externe par son extrémité radialement externe, sa dilatation tend à déplacer son extrémité radialement interne radialement vers l'intérieur.

D'autre part, la virole radialement interne tend à se dilater radialement vers l'extérieur en raison de sa forme annulaire.

Par conséquent, la dilatation thermique respective de la chemise et de la virole radialement interne se traduit par un déplacement radial relatif de ces pièces qui rapproche de la virole radialement interne l'extrémité radialement interne de la chemise, entraînant un effort de compression du joint d'étanchéité, et donc une amélioration de l'étanchéité.

Dans un mode de réalisation, le joint d'étanchéité peut former un cordon fermé s'étendant sur un pourtour externe de l'extrémité radialement interne de la chemise.

De préférence, le joint d'étanchéité peut comprendre des fibres tressées.

Des fibres tressées permettent d'améliorer la tenue du joint à haute température, en particulier à une température d'environ 600°C, tout en conférant au joint la souplesse et l'élasticité requises.

Dans un mode de réalisation, le distributeur peut comprendre :
- un support d'injecteurs annulaire concentrique et situé radialement à l'intérieur de la virole radialement interne, ce support d'injecteurs comprenant une cavité d'admission,
- au moins un organe de liaison s'étendant au droit de l'ouverture de la virole radialement interne de manière à pouvoir acheminer vers la cavité d'admission l'air de ventilation traversant ladite ouverture de la virole radialement interne.

Le distributeur peut comprendre un ou plusieurs organes de liaison dont le nombre et la position circonférentielle peuvent être liés au nombre et à la position circonférentielle de la ou des chemises.

Il est décrit dans ce qui suit des caractéristiques, fonctions et avantages relatifs à l'au moins un organe de liaison en se référant à un unique organe de liaison. Bien entendu, ces caractéristiques, fonctions et avantages s'appliquent à chacun des organes de liaison lorsque le distributeur en comprend plusieurs.

Dans un mode de réalisation, l'organe de liaison peut être annulaire et peut comprendre une extrémité de liaison radialement externe reliée à la virole radialement interne, et une extrémité de liaison radialement interne reliée au support d'injecteurs.

De préférence, lesdites extrémités de liaison de l'organe de liaison peuvent présenter une forme bombée.

Une telle forme bombée autorise une certaine mobilité relative de la virole radialement interne et du support d'injecteurs, tout en assurant une étanchéité satisfaisante lors d'un déplacement relatif de ces pièces.

Dans un mode de réalisation, le canal radial de la chemise peut être au moins en partie disposé en regard de l'organe de liaison.

Autrement dit, lorsque le distributeur comprend plusieurs chemises, il peut comprendre un nombre correspondant d'organes de liaison de sorte que chaque canal radial soit au moins en partie disposé en regard d'un organe de liaison respectif.

Dans un mode de réalisation, le support d'injecteurs peut délimiter radialement l'extérieur d'une cavité interne et peut comprendre un organe d'injection configuré pour mettre en communication fluidique la cavité d'admission et ladite cavité interne.

Lorsque le distributeur est associé à une roue mobile pour former ensemble un étage de turbine, la cavité interne est typiquement une cavité dans laquelle s'étend un moyeu du disque de cette roue mobile qu'il convient de refroidir avec l'air de ventilation.

L'au moins un organe de liaison permet d'acheminer vers cette cavité interne et donc vers le moyeu du disque de la roue mobile à refroidir, via la cavité d'admission et l'organe d'injection, l'air de ventilation provenant du canal radial de la chemise du distributeur.

L'invention a aussi pour objet une turbine pour turbomachine, cette turbine comprenant au moins un distributeur tel que décrit ci-dessus.

La turbine peut notamment être une turbine basse pression et, de préférence, celle-ci peut comprendre plusieurs étages dont au moins le premier étage comprend un tel distributeur.

L'invention a aussi pour objet une turbomachine comprenant au moins une telle turbine.

L'invention trouve notamment application dans le domaine aéronautique, de sorte que la turbomachine peut être une turbomachine pour un ensemble propulsif d'aéronef, l'invention couvrant donc aussi un ensemble propulsif d'aéronef comprenant une telle turbomachine ainsi qu'un aéronef équipé d'un tel ensemble propulsif.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique en coupe axiale d'un ensemble propulsif d'aéronef conforme à l'invention ;
[Fig. 2] est une vue schématique partielle d'un distributeur de turbine conforme à l'invention ;
[Fig. 3] est une vue schématique partielle en perspective d'un distributeur conforme à l'invention ;
[Fig. 4] est une vue schématique en perspective d'une virole radialement interne et d'une chemise du distributeur de la figure 2 ;
[Fig. 5] est une vue schématique partielle en perspective d'une chemise du distributeur de la figure 2, cette chemise comprenant une extrémité radialement interne portant un joint d'étanchéité ;
[Fig. 6] est une vue schématique partielle en perspective de l'extrémité radialement interne de la chemise de la figure 5 ;
[Fig. 7] est une vue schématique partielle en perspective de la virole radialement interne du distributeur de la figure 2 ;
[Fig. 8] est une vue schématique partielle du distributeur de la figure 2, montrant une coopération étanche d'une chemise avec la virole radialement interne de ce distributeur ;
[Fig. 9] est une vue schématique en perspective d'un tube de liaison du distributeur de la figure 2.

### Description détaillée de modes de réalisation

Les figures comprennent un référentiel L, R et C définissant respectivement des directions longitudinale, radiale et circonférentielle orthogonales entre elles.

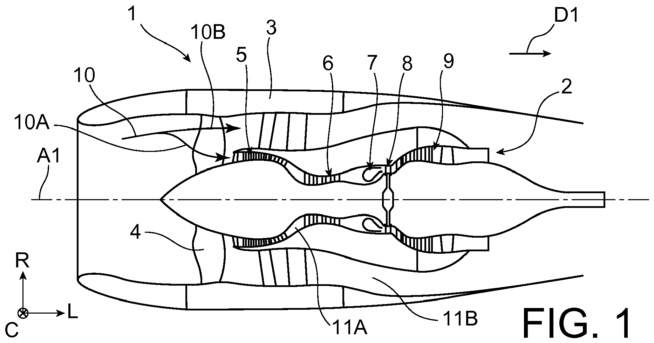

Il est représenté à la figure 1 un ensemble propulsif 1 d'aéronef comprenant une turbomachine 2 carénée par une nacelle 3. Dans cet exemple, la turbomachine 2 est un turboréacteur à double corps et à double flux.

Par la suite, les termes « amont » et « aval » sont définis par rapport à une direction principale D1 d'écoulement des gaz à travers l'ensemble propulsif 1 lorsque celui-ci est propulsé. La direction D1 est parallèle à la direction longitudinale L.

Le turboréacteur 2 présente un axe central longitudinal A1 autour duquel s'étendent ses différents composants, en l'occurrence, de l'amont vers l'aval du turboréacteur 2, une soufflante 4, un compresseur basse pression 5, un compresseur haute pression 6, une chambre de combustion 7, une turbine haute pression 8 et une turbine basse pression 9.

Les compresseurs 5 et 6, la chambre de combustion 7 et les turbines 8 et 9 forment un générateur de gaz.

Lors du fonctionnement du turboréacteur 2, un écoulement d'air 10 pénètre dans l'ensemble propulsif 1 par une entrée d'air en amont de la nacelle 3, traverse la soufflante 4 puis se divise en un flux primaire 10A central et un flux secondaire 10B. Le flux primaire 10A s'écoule dans une veine principale 11A de circulation des gaz traversant les compresseurs 5 et 6, la chambre de combustion 7 et les turbines 8 et 9. Le flux secondaire 10B s'écoule quant à lui dans une veine secondaire 11B entourant le générateur de gaz et délimitée radialement vers l'extérieur par la nacelle 3.

De manière connue en soi, une turbine telle que la turbine haute pression 8 ou la turbine basse pression 9 comporte un ou plusieurs étages, chaque étage comprenant un distributeur, aussi appelé redresseur, et une roue mobile. Le distributeur d'un étage comprend des aubes statoriques configurées pour dévier le flux primaire 10A provenant de la chambre de combustion 7 vers les aubes de la roue mobile du même étage de manière à entraîner cette roue mobile en rotation. Pour chacune des turbines 8 et 9, le ou les distributeurs forment un stator de la turbine, tandis que la ou les roues mobiles forment un rotor de la turbine.

L'invention se rapporte plus spécifiquement à un distributeur 20 appartenant dans cet exemple au premier étage de la turbine basse pression 9. Bien entendu, un ou plusieurs autres étages de la turbine basse pression 9 et/ou de la turbine haute pression 8 peuvent comprendre un distributeur 20 tel que décrit ci-après.

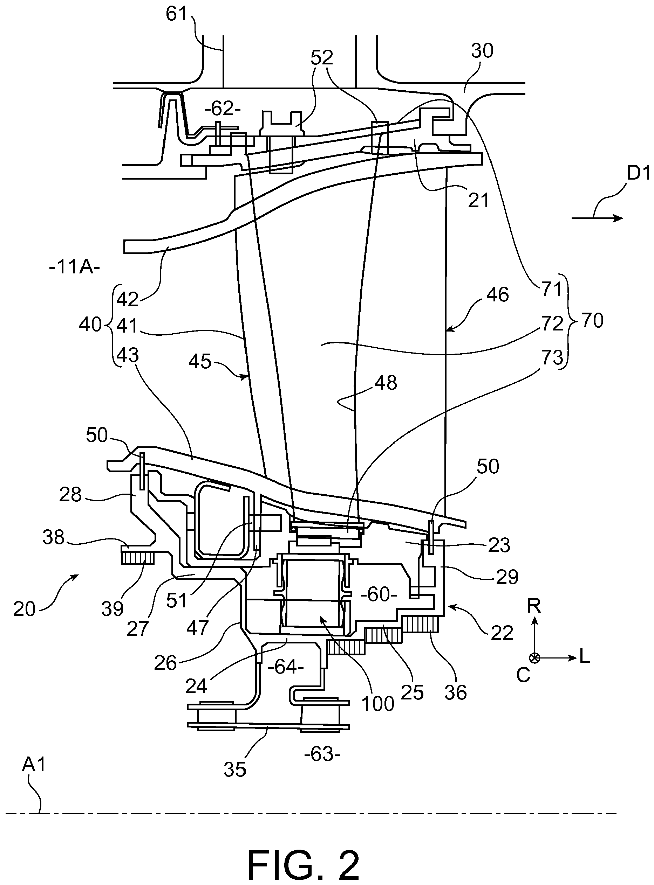

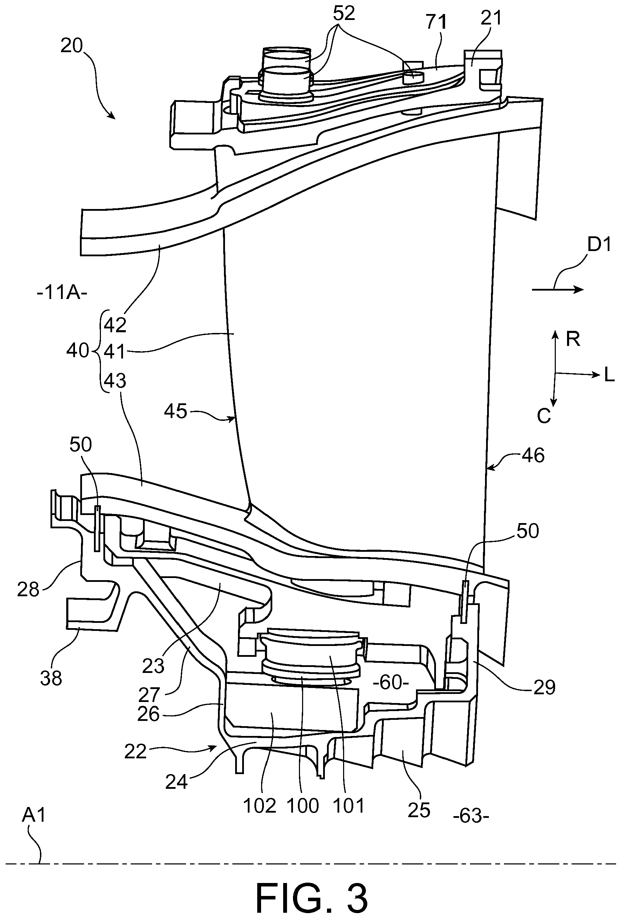

En référence aux figures 2 et 3, le distributeur 20 comprend une virole radialement externe 21, aussi appelée « virole externe », un support d'injecteurs 22, aussi appelé « support », et une virole radialement interne 23, aussi appelée « virole interne », formant chacun une pièce sensiblement annulaire ayant pour axe central l'axe A1 parallèle à la direction longitudinale L.

A défaut d'indication contraire, la description qui suit se rapporte au mode de réalisation de la figure 2 et les caractéristiques décrites s'appliquent telles quelles au mode de réalisation de la figure 3, ces deux modes de réalisation se distinguant essentiellement l'un de l'autre par la géométrie du support 22.

La virole externe 21, le support d'injecteurs 22 et la virole interne 23 sont sensiblement concentriques.

La virole interne 23 et le support d'injecteurs 22 s'étendent chacun radialement à l'intérieur de la virole externe 21.

Dans cet exemple, la virole externe 21 est montée fixement à un carter 30 de la turbine 9. Le carter 30 et le distributeur 20 forment un stator de la turbine 9.

En termes de configuration structurale, le support d'injecteurs 22 comprend une extrémité radialement interne 24 s'étendant sensiblement suivant la direction longitudinale L.

Le support d'injecteurs 22 forme une cavité d'admission 64 délimitée radialement à l'extérieur par l'extrémité radialement interne 24.

Le support d'injecteurs 22 porte au moins un organe d'injection 35. Dans cet exemple, l'organe d'injection 35 est un injecteur à buses conventionnel s'étendant axialement en saillie à partir de l'extrémité radialement interne 24.

L'organe d'injection 35 est configuré pour mettre en communication fluidique la cavité d'admission 64 et une cavité interne 63 délimitée radialement à l'extérieur par le support d'injecteurs 22.

Dans un mode de réalisation non représenté, plusieurs organes d'injection peuvent chacun traverser le support d'injecteurs 22 via au moins un orifice.

Chaque organe d'injection 35 permet d'acheminer de l'air de ventilation provenant d'un compresseur 5 ou 6 vers la cavité interne 63 de la turbine 9 (voir plus loin ci-dessous).

Le support d'injecteurs 22 comprend aussi une partie aval 25, formant des marches, s'étendant vers l'aval et radialement vers l'extérieur à partir d'une extrémité aval de l'extrémité radialement interne 24. Le support d'injecteurs 22 porte sur une surface interne de cette partie aval 25 un matériau abradable 36 qui de manière connue en soi est destiné à coopérer avec des léchettes de la roue mobile (non représentée) située en aval du distributeur 20, de manière à former un joint d'étanchéité dynamique aval entre la cavité interne 63 et la veine primaire 11A.

Le support d'injecteurs 22 comprend également un bras radial 26 s'étendant radialement vers l'extérieur à partir d'une extrémité amont de l'extrémité radialement interne 24, et une partie amont 27 s'étendant vers l'amont à partir d'une extrémité radialement externe du bras radial 26. Dans le mode de réalisation de la figure 2, la partie amont 27 est sensiblement parallèle à la direction longitudinale L. Dans le mode de réalisation de la figure 3, la partie amont 27 est tronconique.

Le support d'injecteurs 22 comprend en outre deux bras radiaux 28 et 29 s'étendant radialement vers l'extérieur à partir respectivement d'une extrémité amont de la partie amont 27 et d'une extrémité aval de la partie aval 25.

Le support d'injecteurs 22 forme dans cet exemple un logement recevant la virole interne 23. La virole interne 23 est montée serrée ou avec du jeu entre les bras radiaux 28 et 29. Dans un mode de réalisation non représenté, la virole interne 23 est fixée au support d'injecteurs 22 par des moyens de fixation tels que des vis.

Dans cet exemple, le support d'injecteurs 22 comprend par ailleurs un élément de support 38 portant un matériau abradable 39 destiné à coopérer avec une léchette d'une roue mobile (non représentée) de la turbine haute pression 8 située en amont du distributeur 20, de manière à former un joint d'étanchéité dynamique amont entre la cavité interne 63 et la veine primaire 11A.

La virole externe 21, le support d'injecteurs 22, la virole interne 23 et le carter 30 sont réalisés dans un matériau leur permettant de résister à des contraintes mécaniques et thermiques relativement importantes, dans cet exemple un matériau métallique par exemple à base de nickel ou de cobalt.

Le distributeur 20 comprend par ailleurs une pluralité d'aubes 40 en matériau composite à matrice céramique (ci-après « CMC ») qui se succèdent circonférentiellement autour de l'axe A1.

Il est représenté sur les figures 2 et 3 une unique aube 40, et la description qui suit se réfère à cette aube 40. Les autres aubes, non représentées sur ces figures, sont ici identiques à l'aube 40.

De manière connue en soi, l'aube 40 comprend une pale 41, une plateforme externe 42 et une plateforme interne 43. La pale 41 comprend un bord d'attaque 45 et un bord de fuite 46 configurés pour diriger le flux primaire 10A provenant de la chambre de combustion 7 sur des aubes (non représentées) de ladite roue mobile située en aval du distributeur 20.

L'aube 40 s'étend radialement entre la virole externe 21 et la virole interne 23, et entre la virole externe 21 et le support d'injecteurs 22, de sorte que la pale 41 s'étende au travers de la veine primaire 11A et puisse ainsi remplir la fonction directrice mentionnée ci-dessus.

Dans cet exemple, la plateforme interne 43 de l'aube 40 est reliée au support d'injecteurs 22 via des languettes d'étanchéité 50 autorisant une translation radiale relative du support d'injecteurs 22 par rapport à l'aube 40. La plateforme interne 43 de l'aube 40 comprend un bras radial 47 relié à la virole interne 23 à l'aide de pions 51 montés avec du jeu dans l'aube 40 de manière à autoriser une dilatation des pions 51 lors du fonctionnement de la turbomachine 2.

Le distributeur 20 de l'invention comprend une pluralité de chemises 70 en matériau métallique, dans cet exemple en nombre identique au nombre d'aubes 40.

Une seule chemise 70 est décrite ci-après en référence aux figures 2 et suivantes. Les autres chemises, non représentées sur ces figures, sont ici identiques à la chemise 70.

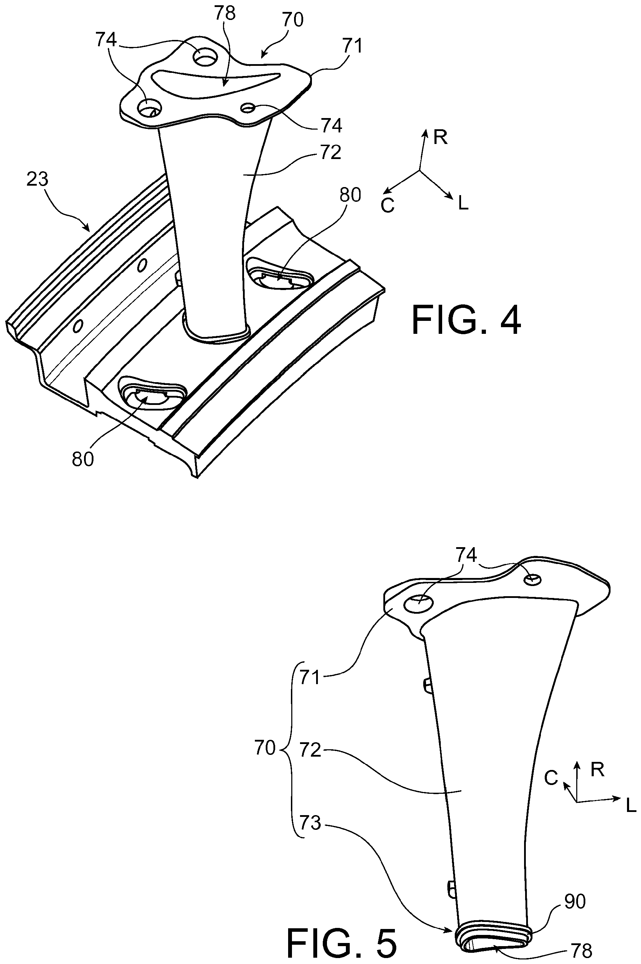

En référence aux figures 4 et 5, la chemise 70 a une forme globalement longiligne dans la direction radiale R.

La chemise 70 comprend une extrémité radialement externe 71 formant une plateforme et un corps 72 relié à la plateforme 71 et comprenant, radialement à l'opposé de la plateforme 71, une extrémité formant une extrémité radialement interne 73 de cette chemise 70.

Le corps 72 de la chemise 70 a une forme sensiblement évasée selon la direction radiale R, présentant des dimensions longitudinale L et circonférentielle C plus importantes au niveau de la plateforme 71 qu'au niveau de l'extrémité radialement interne 73.

En référence à la figure 2, la chemise 70 est fixée à la virole externe 21 par sa plateforme 71, à l'aide de moyens de fixation 52 tels que des vis coopérant avec des moyens de liaison tels que des orifices filetés (non représentés) réalisés dans la virole externe 21. Les moyens de fixation 52 traversent des ouvertures 74 ménagés dans la plateforme 71 (voir figures 4 et 5).

La chemise 70 traverse l'aube 40 en étant disposée dans un logement interne de celle-ci.

En effet, l'aube 40 présente un profil creux formant un logement interne 48 débouchant en une extrémité radialement interne et en une extrémité radialement externe de cette aube 40. Le logement interne 48 a une forme qui correspond sensiblement à celle du corps 72 de la chemise 70 de sorte que cette dernière épouse sensiblement le logement interne 48 de l'aube 40. Bien entendu, les dimensions relatives du logement interne 48 de l'aube 40 et du corps 72 de la chemise 70 sont telles que ces pièces puissent se déplacer l'une par rapport à l'autre dans la direction radiale R, sous l'effet de leur dilatation thermique différentielle.

La virole externe 21 comprend également une ouverture (non représentée) dont la forme correspond sensiblement à celle d'une portion radialement externe du corps 72 de la chemise 70.

En référence à la figure 2, le corps 72 de la chemise 70 traverse l'ouverture de la virole externe 21 et le logement interne 48 de l'aube 40 de sorte que sa plateforme 71 soit en appui radial contre une surface externe de la virole externe 21, que son corps 72 soit logé dans le logement interne 48 de l'aube 40 et que son extrémité radialement interne 73 débouche à l'extérieur de ce logement interne 48 au niveau de la plateforme interne 43 de l'aube 40.

La chemise 70 forme un canal radial 78 d'acheminement d'air de ventilation.

Ce canal radial prend la forme d'un orifice 78 traversant radialement cette chemise 70 de part en part de manière à déboucher d'une part au niveau de la plateforme 71 et d'autre part au niveau de l'extrémité radialement interne 73. La forme de cet orifice 78 est sensiblement similaire à la forme externe du corps 72 de la chemise 70 et donc à la forme du logement interne 48 de l'aube 40.

L'extrémité radialement interne 73 de la chemise 70 est configurée pour coopérer avec la virole interne 23 de la manière décrite ci-après.

En référence aux figures 4, 7 et 8, la virole interne 23 comprend des ouvertures 80, dans cet exemple en nombre identique au nombre de chemises 70.

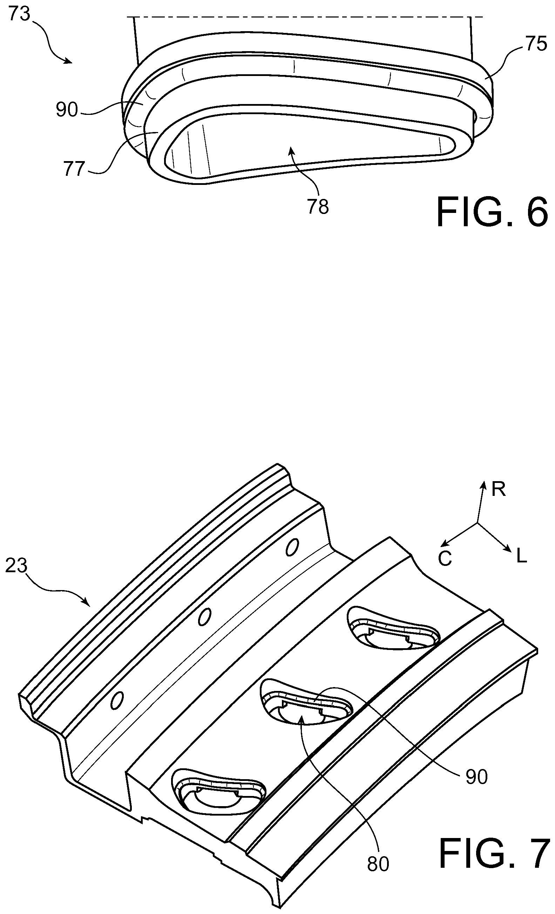

Les figures 4 et 7 montrent un tronçon de la virole interne 23 comprenant trois ouvertures 80.

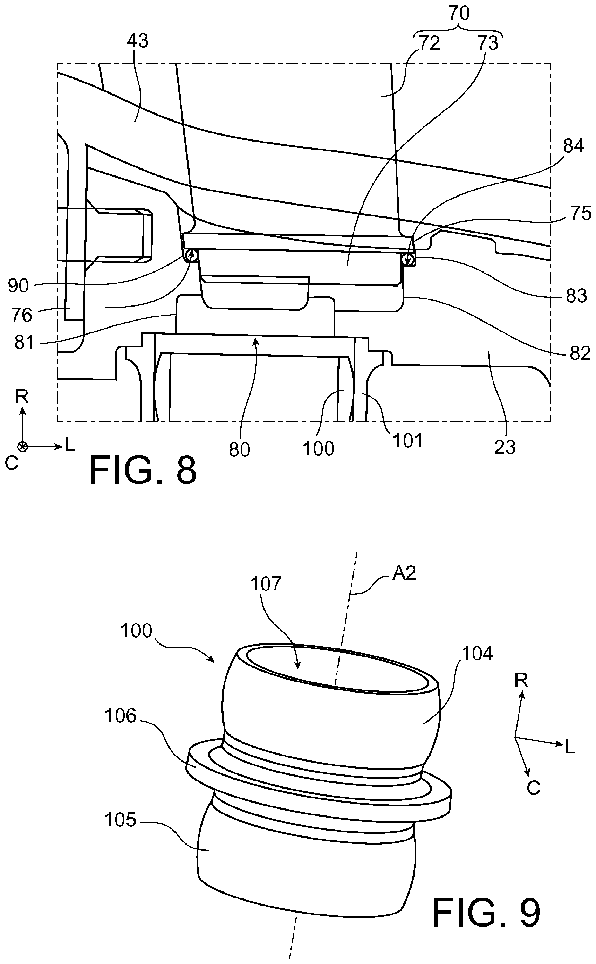

A défaut d'indication contraire, une seule ouverture 80 est décrite ci-après en référence à la figure 8. Les autres ouvertures, non représentées sur cette figure, sont ici identiques à cette ouverture 80.

L'ouverture 80 traverse la virole interne 23 radialement de part en part de manière à déboucher d'une part sur une surface interne et d'autre part sur une surface externe de cette virole interne 23.

Dans cet exemple, l'ouverture 80 est obtenue par usinage d'un premier lamage 81 sur la surface interne de la virole interne 23 et d'un deuxième lamage 82 sur la surface externe de la virole interne 23.

Un troisième lamage 83 est usiné sur la surface externe de la virole interne 23 au niveau de l'ouverture 80 de manière à définir une surface d'appui 84 pour un joint d'étanchéité 90.

La chemise 70 est configurée de sorte que le canal radial 78 qu'elle forme soit en regard de l'ouverture 80 de la virole interne 23.

Dans cet exemple, l'extrémité radialement interne 73 de la chemise 70 comprend un épaulement 75 visible sur les figures 6 et 8, formant une surface d'appui 76 radialement en regard de la surface d'appui 84 décrite ci-dessus.

En référence aux figures 6 et 8, une portion 77 de l'extrémité radialement interne 73, radialement à l'opposé du corps 72 par rapport à l'épaulement 75, a une forme qui correspond sensiblement à la forme du lamage 82 et est engagée dans l'ouverture 80. Cette portion 77 et le lamage 82 sont dans cet exemple dimensionnés de manière à minimiser le jeu entre ces pièces dans les directions longitudinale L et circonférentielle C.

La figure 6 montre le joint d'étanchéité 90 monté sur la chemise 70. Ce joint 90 forme un cordon fermé s'étendant sur un pourtour externe de l'extrémité radialement interne 73 de la chemise 70, et plus précisément sur une partie de la portion 77 de cette extrémité radialement interne 73 de manière à être en appui radialement contre la surface d'appui 76 formée par l'épaulement 75.

A titre d'illustration, la figure 7 montre le joint d'étanchéité 90 logé dans ledit troisième lamage 83 de l'ouverture 80, séparément de la chemise 70. Le joint 90 est en appui radial contre ladite surface d'appui 84 formée par ce troisième lamage 83.

La figure 8 montre l'assemblage de cet ensemble, le joint d'étanchéité 90 étant disposé entre la chemise 70 et la virole interne 23 de manière à être comprimé entre ces pièces, et plus précisément entre les surfaces d'appui 76 et 84.

Dans cet exemple, le joint d'étanchéité 90 comprend des fibres tressées.

Bien entendu, un joint d'étanchéité 90 est disposé de la même manière entre la virole interne 23 et chacune des autres chemises, non représentées sur les figures, autour d'une ouverture 80 correspondante.

En référence aux figures 2 et 3, la virole interne 23 et le support d'injecteurs 22 délimitent radialement entre eux un espace annulaire 60.

Une pluralité d'organes de liaison 100 est logée au sein de cet espace annulaire 60. Dans cet exemple, le distributeur 20 comprend autant d'organes de liaison 100 que de chemises 70.

Un seul organe de liaison 100 est décrit ci-après en référence aux figures 2, 3, 8 et 9. Les autres organes de liaison, non représentés sur ces figures, sont ici identiques à l'organe de liaison 100.

L'organe de liaison 100 s'étend radialement entre la virole interne 23 et le support d'injecteurs 22.

L'organe de liaison 100 est sensiblement annulaire de manière à former un tube de liaison tel que représenté à la figure 9.

Ce tube de liaison 100 présente un axe de révolution A2 et comprend une extrémité de liaison radialement externe 104, une extrémité de liaison radialement interne 105 et une collerette 106.

L'extrémité de liaison radialement externe 104 et l'extrémité de liaison radialement interne 105 sont symétriques l'une par rapport à l'autre par rapport à un plan perpendiculaire à l'axe A2 passant par la collerette 106.

Chacune des extrémités de liaison 104 et 105 de ce tube de liaison 100 a une forme bombée, ou semi-sphérique.

Le tube de liaison 100 comprend un orifice 107 traversant ce tube 100 de part en part le long de l'axe A2.

Pour chaque tube de liaison 100, le distributeur 20 comprend un premier élément de raccordement 101 solidaire de la virole interne 23, et un deuxième élément de raccordement 102 solidaire du support d'injecteurs 22 (voir figure 3).

Dans cet exemple, les éléments de raccordement 101 et 102 sont respectivement fixés à la virole interne 23 et au support 22 d'injecteurs par brasage, ce qui contribue à l'étanchéité du circuit de ventilation.

Les éléments de raccordement 101 et 102 comprennent chacun un orifice sensiblement cylindrique traversant ces éléments radialement de part en part.

Lorsque le tube de liaison 100 est monté sur le distributeur 20, l'axe de révolution A2 du tube 100 est sensiblement parallèle à la direction radiale R, l'extrémité de liaison radialement externe 104 est montée en force dans l'orifice du premier élément de raccordement 101 et l'extrémité radialement interne 105 est montée en force dans l'orifice du deuxième élément de raccordement 102.

Plus généralement, le tube de liaison 100 est au moins en partie disposé en regard du canal radial 78 de sorte que l'orifice 107 de ce tube de liaison 100 soit en communication fluidique, d'une part avec l'ouverture 80 de la virole interne 23 (voir figure 8), et d'autre part avec la cavité d'admission 64 et un organe d'injection 35 respectif (voir figure 2).

Le distributeur 20 de la figure 2 forme ainsi un circuit de ventilation comprenant, dans le sens d'écoulement de l'air de ventilation :
- au moins un conduit d'alimentation 61 réalisé dans le carter 30 et configuré pour acheminer de l'air de ventilation prélevé au niveau du compresseur5 de la turbomachine 2 jusque dans une cavité annulaire externe 62 délimitée radialement à l'intérieur par la plateforme 71 de chacune des chemises 70,
- plusieurs branches de distribution configurées pour acheminer l'air de ventilation depuis cette cavité externe 62 jusque dans la cavité interne 63 de la turbine 9.

Chaque branche de distribution comprend :
- le canal radial 78 formé par l'une des chemises 70 traversant une aube 40 respective,
- une ouverture 80 correspondante de la virole interne 23,
- un organe de liaison 100,
- la cavité d'admission 64,
- un organe d'injection 35 correspondant.

Pour chaque branche de distribution, le joint d'étanchéité 90 correspondant contribue à l'étanchéité du circuit de ventilation en évitant une fuite d'air de ventilation à travers des jeux entre le canal radial 78 et l'ouverture 80 de cette branche de distribution, et en évitant une introduction de gaz de combustion provenant de la veine primaire 11A via ces jeux.

Cette étanchéité est améliorée par la compression du joint d'étanchéité 90 sous l'action de la dilatation thermique de la chemise 70 et de la virole interne 23 de cette branche de distribution.

Bien entendu, la description qui précède n'est aucunement limitative. Par exemple, dans un mode de réalisation non représenté, une partie seulement des aubes 40 est traversée par une chemise 70. Dans un autre mode de réalisation, le distributeur 20 est configuré de sorte que l'air de ventilation sortant du ou des canaux radiaux 78 soit acheminé vers un ou plusieurs organes d'injection 35 en traversant l'espace annulaire 60 sans organe de liaison 100.

## Revendications

1. Distributeur (20) pour turbine (8, 9) de turbomachine (2) s'étendant autour d'un axe central longitudinal (A1), ce distributeur (20) comprenant une virole radialement externe (21) en matériau métallique s'étendant autour dudit axe central longitudinal (A1), une virole radialement interne (23) en matériau métallique concentrique à la virole radialement externe (21), et une pluralité d'aubes (40) en matériau composite à matrice céramique qui se succèdent circonférentiellement autour de l'axe central longitudinal (A1), chaque aube (40) s'étendant radialement entre la virole radialement interne (23) et la virole radialement externe (21), chaque aube (40) présentant un profil creux formant un logement interne (48) débouchant à une extrémité radialement interne et à une extrémité radialement externe de cette aube (40), ce distributeur (20) comprend au moins une chemise (70) en matériau métallique formant un canal radial (78) d'acheminement d'air de ventilation traversant le logement interne (48) de l'une respective des aubes (40), cette chemise (70) comprenant une extrémité radialement externe (71) fixée à la virole radialement externe (21) et une extrémité radialement interne (73) qui coopère avec la virole radialement interne (23) de sorte que le canal radial (78) soit en regard d'une ouverture (80) respective de la virole radialement interne (23) pour acheminer l'air de ventilation à travers cette ouverture (80), ce distributeur (20) étant **caractérisé en ce qu'**il comprend au moins un joint d'étanchéité (90) disposé entre la virole radialement interne (23) et la chemise (70) de manière à assurer l'étanchéité entre le canal radial (78) et ladite ouverture (80) de la virole radialement interne (23), la chemise (70) comprenant un épaulement (75) formant une surface d'appui (76) radialement en regard d'une surface d'appui (84) correspondante de la virole radialement interne (23) de sorte que le joint d'étanchéité (90) puisse être comprimé radialement entre ces surfaces d'appui (76, 84).

2. Distributeur (20) selon la revendication 1, dans lequel le joint d'étanchéité (90) forme un cordon fermé s'étendant sur un pourtour externe de l'extrémité radialement interne (73) de la chemise (70).

3. Distributeur (20) selon la revendication 1 ou 2, dans lequel le joint d'étanchéité (90) comprend des fibres tressées.

4. Distributeur (20) selon l'une quelconque des revendications 1 à 3, ce distributeur (20) comprenant :
- un support d'injecteurs (22) annulaire concentrique et situé radialement à l'intérieur de la virole radialement interne (23), ce support d'injecteurs (22) comprenant une cavité d'admission (64),
- au moins un organe de liaison (100) s'étendant au droit de l'ouverture (80) de la virole radialement interne (23) de manière à pouvoir acheminer vers la cavité d'admission (64) l'air de ventilation traversant ladite ouverture (80) de la virole radialement interne (23).

5. Distributeur (20) selon la revendication 4, dans lequel l'organe de liaison (100) est annulaire et comprend une extrémité de liaison radialement externe (104) reliée à la virole radialement interne (23), et une extrémité de liaison radialement interne (105) reliée au support d'injecteurs (22).

6. Distributeur (20) selon la revendication 5, dans lequel lesdites extrémités de liaison (104, 105) de l'organe de liaison (100) présentent une forme bombée.

7. Distributeur (20) selon l'une quelconque des revendications 4 à 6, dans lequel le canal radial (78) de la chemise (70) est au moins en partie disposé en regard de l'organe de liaison (100).

8. Distributeur (20) selon l'une quelconque des revendications 4 à 7, dans lequel le support d'injecteurs (22) délimite radialement l'extérieur d'une cavité interne (63), le support d'injecteurs (22) comprenant un organe d'injection (35) configuré pour mettre en communication fluidique la cavité d'admission (64) et ladite cavité interne (63).

9. Turbine (8, 9) pour turbomachine (2), cette turbine (8, 9) comprenant au moins un distributeur (20) selon l'une quelconque des revendications 1 à 8.

10. Turbomachine (2) comprenant au moins une turbine (8, 9) selon la revendication 9.

## Patentansprüche

1. Düse (20) für eine Turbine (8, 9) einer Turbomaschine (2), die sich um eine zentrale Längsachse (A1) erstreckt, wobei diese Düse (20) einen radial äußeren Ring (21) aus metallischem Material umfasst, der sich um die zentrale Längsachse (A1) erstreckt, einen radial inneren Ring (23) aus metallischem Material, der zum radial äußeren Ring (21) konzentrisch ist, und eine Vielzahl von Schaufeln (40) aus einem keramischen Matrix-Verbundwerkstoff, die einander umfangmäßig um die zentrale Längsachse (A1) folgen, wobei sich jede Schaufel (40) radial zwischen dem radial inneren Ring (23) und dem radial äußeren Ring (21) erstreckt, wobei jede Schaufel (40) ein Hohlprofil aufweist, das eine innere Aufnahme (48) bildet, die an einem radial inneren Ende und an einem radial äußeren Ende dieser Schaufel (40) ausmündet, wobei diese Düse (20) mindestens einen Mantel (70) aus metallischem Material umfasst, der einen radialen Kanal (78) zur Beförderung von Lüftungsluft bildet, der die innere Aufnahme (48) von einer jeweiligen der Schaufeln (40) durchquert, wobei dieser Mantel (70) ein radial äußeres Ende (71) umfasst, das am radial äußeren Ring (21) befestigt ist, und ein radial inneres Ende (73), das mit dem radial inneren Ring (23) zusammenwirkt, so dass der radiale Kanal (78) einer jeweiligen Öffnung (80) des radial inneren Rings (23) zugewandt ist, um die Lüftungsluft durch diese Öffnung (80) zu befördern, wobei diese Düse (20) **dadurch gekennzeichnet ist, dass** sie mindestens eine Dichtung (90) umfasst, die zwischen dem radial inneren Ring (23) und dem Mantel (70) derart angeordnet ist, dass die Dichtigkeit zwischen dem radialen Kanal (78) und der Öffnung (80) des radial inneren Rings (23) gewährleistet ist, wobei der Mantel (70) einen Absatz (75) umfasst, der eine einer entsprechenden Stützfläche (84) des radial inneren Rings (23) radial zugewandte Stützfläche (76) bildet, so dass die Dichtung (90) radial zwischen diesen Stützflächen (76, 84) komprimierbar ist.

2. Düse (20) nach Anspruch 1, wobei die Dichtung (90) einen geschlossenen Strang bildet, der sich auf einem äußeren Umfang des radial inneren Endes (73) des Mantels (70) erstreckt.

3. Düse (20) nach Anspruch 1 oder 2, wobei die Dichtung (90) geflochtene Fasern umfasst.

4. Düse (20) nach einem der Ansprüche 1 bis 3, wobei diese Düse (20) umfasst:
- einen konzentrischen ringförmigen Spritzdüsenhalter (22), der sich radial innerhalb des radial inneren Rings (23) befindet, wobei dieser Spritzdüsenhalter (22) einen Einlasshohlraum (64) umfasst,
- mindestens ein Verbindungsorgan (100), das sich senkrecht zur Öffnung (80) des radial inneren Rings (23) derart erstreckt, dass die Lüftungsluft, die die Öffnung (80) des radial inneren Rings (23) durchquert, zum Einlasshohlraum (64) beförderbar ist.

5. Düse (20) nach Anspruch 4, wobei das Verbindungsorgan (100) ringförmig ist und ein radial äußeres Verbindungsende (104) umfasst, das mit dem radial inneren Ring (23) verbunden ist, und ein radial inneres Verbindungsende (105), das mit dem Spritzdüsenhalter (22) verbunden ist.

6. Düse (20) nach Anspruch 5, wobei die Verbindungsenden (104, 105) des Verbindungsorgans (100) eine bauchige Form aufweisen.

7. Düse (20) nach einem der Ansprüche 4 bis 6, wobei der radiale Kanal (78) des Mantels (70) mindestens zum Teil dem Verbindungsorgan (100) zugewandt angeordnet ist.

8. Düse (20) nach einem der Ansprüche 4 bis 7, wobei der Spritzdüsenhalter (22) das Äußere eines inneren Hohlraums interne (63) radial begrenzt, wobei der Spritzdüsenhalter (22) ein Einspritzorgan (35) umfasst, das dazu ausgelegt ist, den Einlasshohlraum (64) und den inneren Hohlraum (63) in Fluidkommunikation zu versetzen.

9. Turbine (8, 9) für eine Turbomaschine (2), wobei diese Turbine (8, 9) mindestens eine Düse (20) nach einem der Ansprüche 1 bis 8 umfasst.

10. Turbomaschine (2), umfassend mindestens eine Turbine (8, 9) nach Anspruch 9.

## Claims

1. Nozzle (20) for turbine (8, 9) of a turbine engine (2) extending about a longitudinal central axis (A1), this nozzle (20) comprising a radially outer ring shell (21) made of metallic material extending about said longitudinal central axis (A1), a radially inner ring shell (23) made of metallic material concentric with the radially outer ring shell (21), and a plurality of vanes (40) made of ceramic matrix composite material in succession circumferentially about the longitudinal central axis (A1), each vane (40) extending radially between the radially inner ring shell (23) and the radially outer ring shell (21), each vane (40) having a hollow profile forming an inner recess (48) opening at a radially inner end and at a radially outer end of this vane (40), this nozzle (20) comprises at least one liner (70) made of metallic material forming a radial channel (78) for conveying ventilation air passing through the inner recess (48) of respectively one of the vanes (40), this liner (70) comprising a radially outer end (71) attached to the radially outer ring shell (21) and a radially inner end (73) which engages with the radially inner ring shell (23) such that the radial channel (78) is facing a respective opening (80) of the radially inner ring shell (23) to convey the ventilation air through this opening (80), the nozzle (20) being **characterised in that** it comprises at least one seal (90) disposed between the radially inner ring shell (23) and the liner (70) so as to ensure the tightness between the radial channel (78) and said opening (80) of the radially inner ring shell (23), the liner (70) comprising a shoulder (75) forming a support surface (76) radially facing a corresponding support surface (84) of the radially inner ring shell (23) such that the seal (90) can be compressed radially between these support surfaces (76, 84).

2. Nozzle (20) according to claim 1, wherein the seal (90) forms a closed bead extending along an outer perimeter of the radially inner end (73) of the liner (70).

3. Nozzle (20) according to claim 1 or 2, wherein the seal (90) comprises braided fibres.

4. Nozzle (20) according to any one of claims 1 to 3, this nozzle (20) comprising:
- a concentric annular injector support (22) located radially inside the radially inner ring shell (23), this injector support (22) comprising an intake cavity (64),
- at least one linking member (100) extending next to the opening (80) of the radially inner ring shell (23) so as to be able to convey the ventilation air passing through said opening (80) of the radially inner ring shell (23) to the intake cavity (64).

5. Nozzle (20) according to claim 4, wherein the linking member (100) is annular and comprises a radially outer linking end (104) connected to the radially inner ring shell (23), and a radially inner linking end (105) connected to the injector support (22).

6. Nozzle (20) according to claim 5, wherein said linking ends (104, 105) of the linking member (100) have a rounded shape.

7. Nozzle (20) according to any one of claims 4 to 6, wherein the radial channel (78) of the liner (70) is at least partially disposed facing the linking member (100).

8. Nozzle (20) according to any one of claims 4 to 7, wherein the injector support (22) radially delimits the outside of an inner cavity (63), the injector support (22) comprising an injection member (35) configured to place the intake cavity (64) and said inner cavity (63) in fluidic communication.

9. Turbine (8, 9) for turbine engine (2), this turbine (8, 9) comprising at least one nozzle (20) according to any one of claims 1 to 8.

10. Turbine engine (2), comprising at least one turbine (8, 9) according to claim 9.
